# EUROPEAN PATENT APPLICATION

(11) **EP 2 607 002 A1**
(43) Date of publication of application: **26.06.2013**
(21) Application number: 10856105.1
(22) Date of filing: 20.08.2010
(51) Int. Cl.: B23D 23/00, B23D 35/00

(54) **MACHINE FOR HOT DISPENSING BRASS OR ALUMINUM PLUGS**

(71) Applicant: Esteve Camps, Carles, 17458 Fornells de la Selva (Girona) (ES)
(72) Inventor: Esteve Camps, Carles, 17458 Fornells de la Selva (Girona) (ES)
(74) Representative: Morgades y Manonelles, Juan Antonio
(86) International application number: PCT/ES2010/000358
(87) International publication number: WO 2012/022815

(57) **Abstract**

The invention relates to a machine for the hot dispensing of brass or aluminium plugs of predetermined lengths, obtained by cutting an elongated brass or aluminium bar. The invention is advantageous in that there is no loss of material in the cut pieces and the manufacturing process costs and times are very competitive. The machine can very accurately cut bars made from standard brass, as well as special brass, and can manufacture plugs using a "just in time" production system.

The invention consists of a single compact body essentially comprising: means for progressively heating more than one brass or aluminium bar such that the bar closest to the outlet is the hottest bar; means for automatically pushing the bar nearest the outlet towards cutting means; and means for transversally cutting the pre-heated bar, thus forming plugs.

## Description

### OBJECT OF THE INVENTION:

As stated in the title, the invention relates to a machine for the hot dispensing of brass or aluminium plugs of predetermined lengths, obtained by cutting an elongated brass or aluminium bar. The invention is advantageous in that there is no loss of material in the cut pieces and the manufacturing process costs and times are much lower than in conventional machines. Another aim of the invention is that the machine can cut standard or special brass bars (unleaded or others) with high precision. Yet another of the aims of the invention is to design a machine that can manufacture plugs using a "just in time" production system. The final purpose of the invention is that the cutting media are completely versatile, i.e. they can be used to cut bars of different diameters.

### FIELD OF THE TECHNIQUE:

More specifically, the invention is a machine for the hot dispensing of brass or aluminium plugs, also known in technical jargon as pre-cut bar segments, obtained by a process of cutting an elongated brass or aluminium bar, for the purpose of pressing to obtain finished parts in other equipment such as hot stamping machines.

### BACKGROUND OF THE INVENTION:

Conventionally, the production of plugs from the cutting of an elongated brass or aluminium, preferably cylindrical, is done in a cut-off machine that cuts the elongated bar into equal sections.

This cold cutting process causes inherent material losses in the cutting area of 0.7 to 1.5 mm, representing a substantial loss of material, which then adversely affects the final product cost, since the shavings produced have to be treated and this creates an added cost in the cost evaluation.

The normal process for heating the plug before the stamping process is by induction techniques or gas, although they both have very high associated energy costs and the heat they produce is not uniform throughout the volume of the brass or aluminium plugs.

The "standard" brass mostly used for stamping parts is a **copper-zinc** alloy with a 2% lead composition, which gives optimal malleability to the material. However, current laws in this area are starting to limit its use due to its level of danger. Therefore, the market is starting to require the use of special types of "lead-free" brass as an alternative to "standard" brass. The aforementioned "lead-free" brass has lower percentages of lead -0 to 0.4%- but is not easily cut when cold and produces a lot of waste.

Since brass has a variable composition, it is not always possible to assure that the same part will have the same weight. Therefore, it is always necessary to bear in mind the provenance of the batch of brass used as the composition of the brass varies from one batch to another.

Up to now, there has been no known brass or aluminium plug dispenser that is totally compact and integrated in a single body, which includes brass or aluminium bar heating means and then means for the high precision cutting of the pre-heated bar into plugs, also capable of cutting lead-free brass parts, and capable of generating a "just in time" production system.

Therefore, the machines and procedures that make up the State of the Art have numerous drawbacks, outlined above, which are overcome by the advantageous plug dispensing machine object of this invention.

### DESCRIPTION OF THE INVENTION:

The machine for the hot dispensing of brass or aluminium plugs object of this invention consists of a single compact body consisting basically of:
- means for progressively heating more than one brass or aluminium bar such that the bar closest to the outlet is the hottest bar, and so on successively;
- means for automatically pushing the bar nearest the outlet towards cutting means; and
- means for transversally cutting the pre-heated brass or aluminium bar to form plugs of the same predetermined lengths; these cutting means being formed by at least two horizontal blades, arranged facing each other, so that when they come together the plug is cut, followed by a slight forward and backward movement to ensure the plug is cut perfectly without any burr.

One of the features of the invention is that before the operation of cutting of the brass or aluminium bar by the cutting device, the bar is pre-heated by progressive heating means, achieving shear cutting and thereby eliminating the production of shaving in the cutting operation.

Preferably, the means for progressively heating of the brass or aluminium bars will be adapted to heat a set of bars at the same time, having the capacity to hold and gradually heat from 5 to 20 bars, allowing more automated mass production with lower energy costs (around 50% less).

The aforementioned means for heating the brass or aluminium bars consists of a common elongated open chamber in which the set of bars is arranged, and which is equipped with a plurality of burners distributed along the chamber and directed towards the interior thereof, adapted to gradually heat the whole set of bars acting by hot air convection.

According to the preferred embodiment of the invention, the common chamber of the heating means consists of a base adapted for the brass or aluminium bars to rest against each other, two side walls, a rear wall, a front wall and a roof, being open at one side to allow the introduction of the bars. The front wall has a hole through which the foremost bar is removed towards the cutting device, the chamber being supported by a lower frame or bench.

Meanwhile, this bench could include means of movement such as wheels or guides.

Preferably, the common chamber is composed of several independent sectors, each of which has at least one burner with several burner nozzles, the burners being forced air burners, and each burner having an independent and variable flame temperature, so that the temperature distribution along the length of the chamber will generally be from higher to lower starting with the burner located closest to the cutting area and ending with the one located furthest away.

Thanks to the ingenious provision of forced air burners, the minimum operating pressure of the equipment required is very low, about 0.22 bar, which provides great advantages in terms of the versatility of installation of this equipment in different locations with different work conditions, and the fact that it can work with any type of gas.

The average temperature of the chamber is preferably between 400°C and 900°C. The bars are heated by air convection, which are heated by the burners, something that significantly improves the homogeneity in the heating of the entire volume of the bars.

The fact of working by heating the whole bars, and not with precut plugs, means that the temperature at any point of the bar is much more homogeneous.

The heating means include a feed system arranged on the outside of the chamber, where a number of bars are manually or automatically stored. Preferably, this feed system will be a feed ramp which is slightly tilted towards the base of the feed system and is equipped with catches on the inside to prevent the bars from falling. This feed ramp is moved forward causing the displacement of the bars on the inside of the heating system and causing the first bar on the feed ramp to fall on to the base when it moves back.

The feeding operation of an new bar in the base is a fully automated operation, as once the first bar has left the heating means by its front, an order is sent to the servo-motor connected to the feed ramp to carry out the next introduction, therefore the bar that was located at the rear of the base is pushed by the next bar to occupy the position of the first bar.

The progressive heating process of the bars inside the heating means is achieved by the advantageous distribution of temperatures as a result of different burner flame temperatures, which are programmed at different temperatures by means of electrical or electronic controls that adjust the flame temperature of each burner.

As already mentioned above, this temperature distribution in the chamber will generally be longitudinal inside the heating means from greater to lesser, starting with the burner closest to the cutting area up to the farthest. In addition, thanks to the configuration of the chamber, open at the front, the distribution of temperatures in the transversal direction will be that of greater temperature at the rear of the chamber and less at the front. Thus, the bar, which is located in the rearmost position on the base of the chamber is ready to be fed to the cutting device and will also be the hottest, and in turn the front of the bar will be hotter than the back.

Additionally, temperature probes are incorporated in each of the sub-chambers or enclosures arranged within the chamber, in order to measure the temperatures inside these sub-chambers.

Also additionally, it will incorporate another temperature probe for the surface of the bar just before reaching the outlet orifice of the chamber body, which uses preferably infrared technology.

The front base of the chamber body or through the heated bar is evacuated, are arranged the cutting device.

Meanwhile, pushing means are used to move the forwardmost bar to the cutting device, which are designed to press the rear part of the forwardmost bar, and thereby make it move forward sequentially. This pusher is linked to a chain that is located along a longitudinal guide, and driven by a servomotor that controls the torque and speed of the pusher.

Meanwhile, the transversally cutting system consists of a vertical block located just after the outlet orifice of the chamber body through which the pre-heated bar is fed, and this vertical block incorporates at least two horizontal blades, arranged facing each other, so that when they are moved together by the action of respective servo-motors and with the section of bar located in the space between these blades, the transverse cut is made; and then there is a slight lateral, back and forth movement of both blades, leaving the plug completely cut and with no burr.

This back and forth movement is performed preferably with respective auxiliary servo-motors, each one connected to one of the shears.

In the case of there being more than two blades, these will be radially distributed.

There will be an automatic measuring element to determine the length of the plug, which will preferably be a servo-motor.

Preferably, the aforementioned automatic measuring element will be a sensing element arranged in the same direction as the bar but at a certain distance from its front, in a horizontal position, which is adapted to move forward driven preferably by a servo-motor and come to a stop against the front of the heated bar at the predetermined cutting length, and once the cut has been made the sensing element moves back again to allow the following cut of the same bar to be made and the cut plug to be released.

The cut made by the proposed hot shear cutting system has the following great advantages over currently existing systems:
- The bar section is not substantially deformed, but remains almost completely circular (and not with elliptical deformation).
- The shears are single items for all bar diameters to be cut, i.e. the cutting system is totally versatile and does not have to be changed for each different bar diameter.
- The length parameter of the plug or pre-cut bar segment can be varied without having to interrupt the plug manufacturing process.

It may be provided with means for collecting or evacuating the cut plugs, which, for example, use the force of gravity to carry the plugs outside the machine, to be stored, for example, in a feeder or container. The cut plugs may also be evacuated using external manipulators.

To adjust the settings of the machine described in this invention, for cutting a new series of plugs that have a different bar diameter than the previous series, the machine has automatic means for vertical movement of the cutting means with respect the heating means. This freedom of movement allows the machine to be adjusted quickly and effectively by the user to a new part series.

The proposed equipment could also incorporate means for controlling the machine parameters, such as the internal temperature of the heating system chambers, or the surface temperature of the brass or aluminium bar just before cutting. These controlling means are formed by an automaton adapted to modify the parameters of the machine, which is connected to a communicator, such as a PC, which is adapted to transmit the functions chosen by the user to the automaton.

The heating system and the cutting system are supported on a supporting structure or base frame, which is formed by a series of rails joined by crosspieces to provide strength and stability to the assembly.

On the side of the machine where the bar feeding means are located is installed a bar loading element, adapted to store a large number of bars and gradually load them into the machine. This bar loading element could include means of movement such as wheels or guides.

The plug dispensing machine, including the bar loading element, can be installed in a larger housing, with evacuation of fumes from the combustion of gas.

### Description of the drawings:

Figure 1 is a front perspective view of the machine for the hot dispensing of brass or aluminium plugs object of this invention.
Figure 2 is another front perspective view of the plug dispensing machine of figure 1.
Figure 3 is a rear perspective view of the plug dispensing machine of figure 1.
Figure 4 is a rear view of the plug dispensing machine of figure 1.
Figure 5 is a front view of the plug dispensing machine of figure 1.
Figure 6 is a side front view of the plug dispensing machine of figure 1.

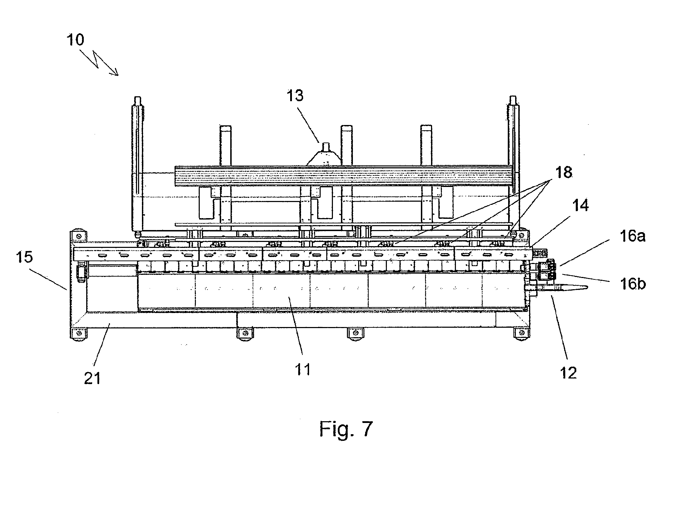

Figure 7 is a top view of the plug dispensing machine of figure 1.
Figure 8 is a perspective view of the detail of the cutting system of plug of figure 1.

A detailed list of the main parts of the invention shown in the attached drawings is given below and detailed with a number in the attached drawings; (10) plug dispensing machine, (11) heating means, (12) hot cutting system, (13) bar loading module, (14) front face of the heating means (11), (15) rear face of the heating means (11), (16a, 16b) blade servo-motors, (17) automatic adjustment servo-motor, (18) burners, (19) bars, (20) pushing means of the bar, (21) lower frame or bench, (22) feed ramp.

### Description of a preferred embodiment of the invention:

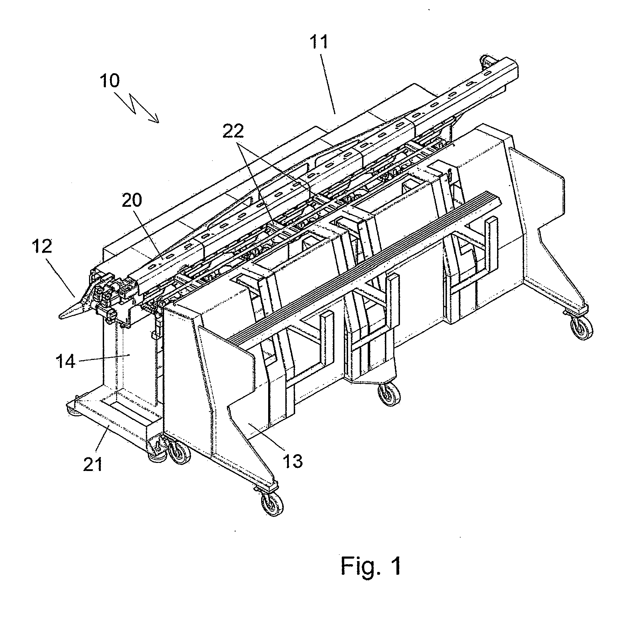

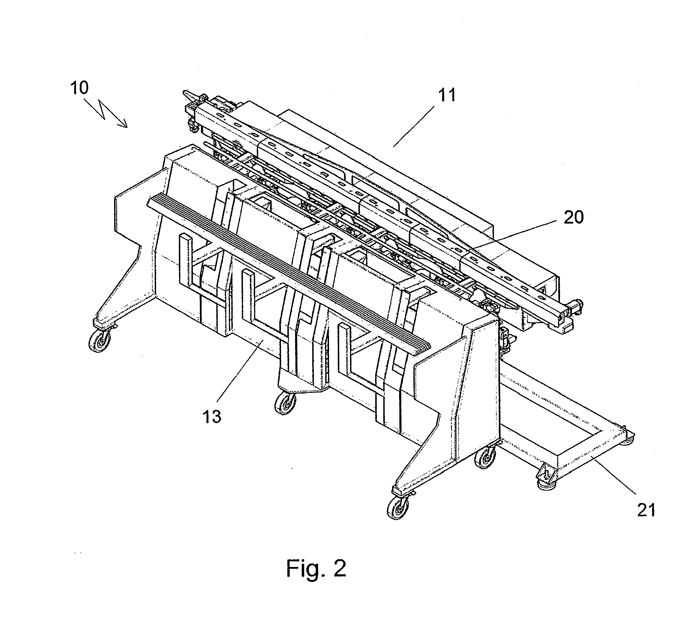

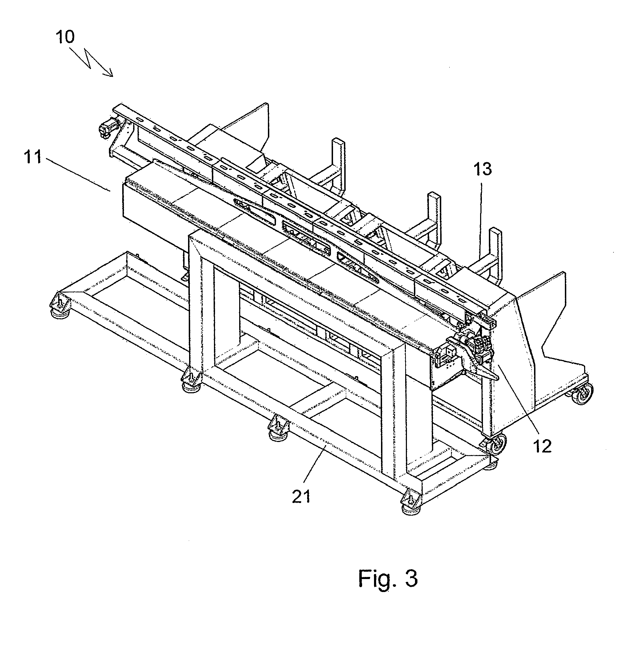

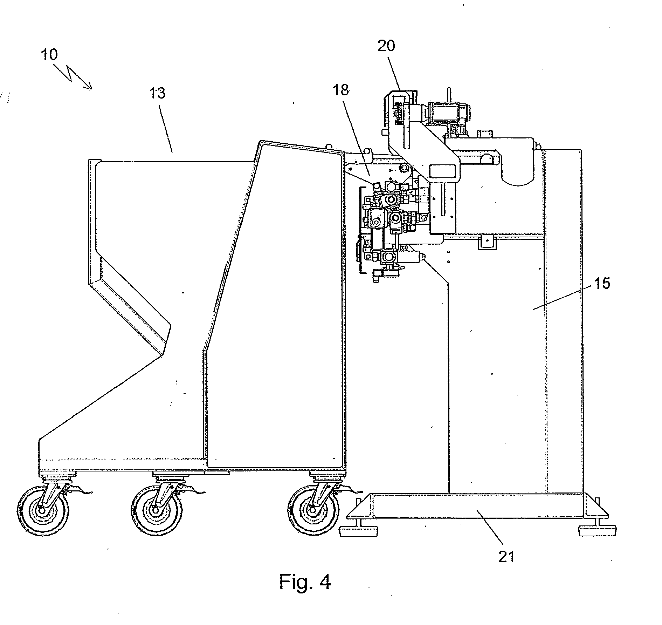

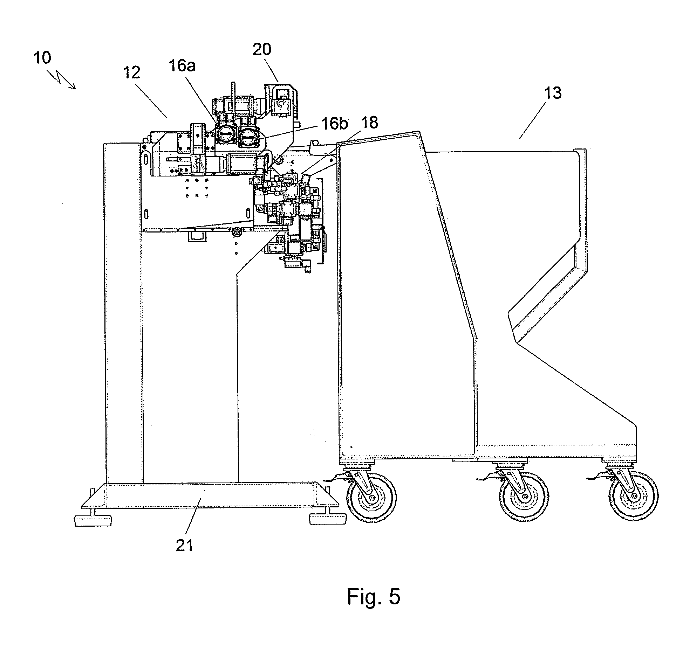

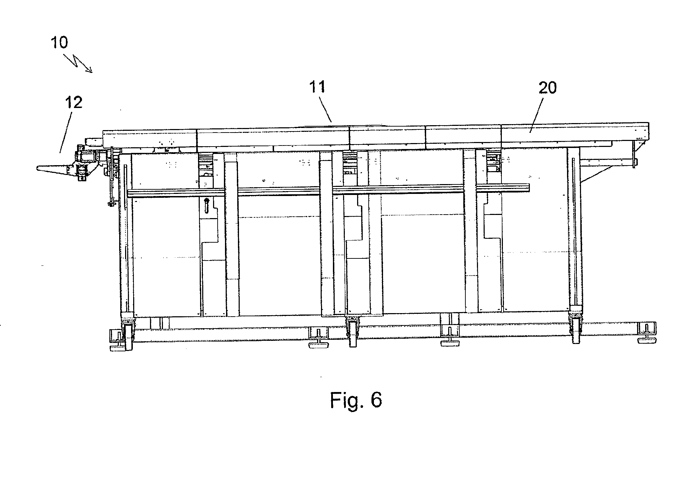

In one of the preferred embodiments of this invention, and as can be seen in the assembly figures 1 to 6, the machine for the hot dispensing of brass or aluminium plugs (10) features a single compact body comprising mainly the following elements:
- A system for the gradual heating of a group of 5-20 brass or aluminium bars (19), so that the bar nearest the outlet is the hottest, and so on, this heating system consisting of a common elongated open chamber in which the set of bars is arranged, and equipped with a plurality of burners (18) distributed along the chamber and directed towards the interior thereof;
- means for automatically pushing (20) the bar nearest the outlet towards cutting means by a pusher, which is designed to press the rear of the forwardmost bar, and thereby make it move forwards sequentially, this pusher being joined to a chain that runs along a longitudinal guide and is activated by a servo-motor that controls the torque and the speed of the pusher; and
- means for transversally cutting (12) the pre-heated brass or aluminium bar to form plugs of the same predetermined lengths; these cutting means being formed by at least two horizontal blades (not shown in the figures), arranged facing each other, so that when they come together the plug is cut, followed by a slight forward and backward movement to ensure the plug is cut perfectly without any burr.

According to the preferred embodiment of the invention shown in the attached figures, the common chamber of the heating means consists of a base adapted for the set of bars (19) to be rested against each other, two side walls, a rear wall (15), a front wall (14) and a roof, being open at the front of one side so that the bars (19) can be introduced. The front wall (14) has a hole or passageway through which the foremost bar is removed towards the cutting device (12), the chamber being supported by a lower frame or bench (21).

As can be seen in figure 1, the common chamber is composed of several independent sectors, each of which has at least one burner (18) with several burner nozzles, the burners being forced air burners, and each burner having an independent and variable flame temperature.

The heating means (11) include a feed system arranged on the outside of the chamber, where a number of bars are manually or automatically stored, this feed system being a feed ramp (22) which is slightly tilted towards the base of the feed system and is equipped with catches on the inside to prevent the bars from falling.

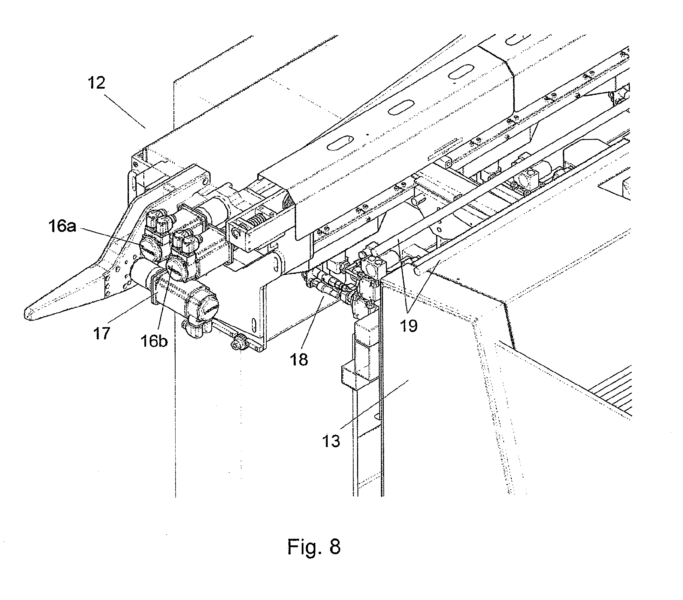

As shown in figure 8, the transversally cutting system (12) consists of a vertical block located just after the outlet orifice of the chamber body through which the pre-heated bar is fed, and this vertical block incorporates at least two horizontal blades (not shown in the attached figures), arranged facing each other, so that when they are moved together by the action of respective servo-motors (16a, 16b) and with the section of bar located in the space between these blades, the transverse cut is made; and then there is a slight lateral, back and forth movement of both blades, leaving the plug completely cut and with no burr.

This back and forth movement is performed preferably with respective auxiliary servo-motors, each one connected to one of the shears.

There will be an automatic measuring element to determine the length of the bar to be cut, which will preferably be a servo-motor (17).

The heating system (11) and the cutting system (12) are supported on a supporting structure or base frame (21), which is formed by a series of rails joined by crosspieces to provide strength and stability to the assembly.

On the side of the plug dispensing machine (10) where the bar feeding means are located is installed a bar loading element or module (13), adapted to store a large number of bars and gradually load them into this machine (10). This bar loading element includes means of movement such as wheels or guides.

Having sufficiently described this invention using the Figures attached, it is easy to understand that any changes judged to be suitable may be made, whenever these changes do not alter of the essence of the invention summarised in the following claims.

## Claims

1. "MACHINE FOR THE HOT DISPENSING OF BRASS OR ALUMINIUM PLUGS" to be fed by brass or aluminium bars, which are cut to form bar sections of the same length called plugs, **characterized by** having a single compact body comprising:
- means for progressively heating more than one brass or aluminium bar such that the bar closest to the outlet is the hottest bar, and so on successively;
- means for automatically pushing the bar nearest the outlet towards cutting means; and
- means for transversally cutting the pre-heated brass or aluminium bar to form plugs of the same predetermined lengths; these cutting means being formed by at least two horizontal blades, arranged facing each other, so that when they come together the plug is cut, followed by a slight forward and backward movement to ensure the plug is cut perfectly without any burr, eliminating the production of shaving in the cutting operation.

2. "MACHINE FOR THE HOT DISPENSING OF BRASS OR ALUMINIUM PLUGS" according to the claim 1, **characterised in that** the means for heating the brass or aluminium bars consists of a common elongated open chamber in which the set of bars with an average temperature between 400°C and 900°C is arranged, and which is equipped with a plurality of burners distributed along the chamber and directed towards the interior thereof, adapted to gradually heat the whole set of bars acting by hot air convection.

3. "MACHINE FOR THE HOT DISPENSING OF BRASS OR ALUMINIUM PLUGS" according to the preceding claims, **characterised in that** the common chamber is composed of several independent sectors, each of which has at least one burner with several burner nozzles, the burners being forced air burners, and each burner having an independent and variable flame temperature, so that the temperature distribution along the length of the chamber will generally be from higher to lower starting with the burner located closest to the cutting area and ending with the one located furthest away, so that the minimum operating pressure of the equipment required is about 0.22 bar.

4. "MACHINE FOR THE HOT DISPENSING OF BRASS OR ALUMINIUM PLUGS" according to the preceding claims, **characterised in that** the heating means include a feed system arranged on the outside of the chamber, where a number of bars are manually or automatically stored. This feed system is a feed ramp which is slightly tilted towards the base of the feed system and is equipped with catches on the inside to prevent the bars from falling. This feed ramp is moved forward causing the displacement of the bars on the inside of the heating system and causing the first bar on the feed ramp to fall on to the base when it moves back, so that the feeding operation of an new bar in the base is a fully automated operation, as once the first bar has left the heating means by its front, an order is sent to the servo-motor connected to the feed ramp to carry out the next introduction, therefore the bar that was located at the rear of the base is pushed by the next bar to occupy the position of the first bar.

5. "MACHINE FOR THE HOT DISPENSING OF BRASS OR ALUMINIUM PLUGS" according to the claim 1, **characterised in that** the forwardmost bar is pushed towards cutting means by a pusher, which is designed to press the rear of the forwardmost bar, and thereby make it move forwards sequentially, this pusher being joined to a chain that runs along a longitudinal guide and is activated by a servo-motor that controls the torque and the speed of the pusher.

6. "MACHINE FOR THE HOT DISPENSING OF BRASS OR ALUMINIUM PLUGS" according to the claim 1, **characterised in that** the transversally cutting system consists of a vertical block located just after the outlet orifice of the chamber body through which the pre-heated bar is fed, and this vertical block incorporates at least two horizontal blades, arranged facing each other, so that when they are moved together by the action of respective servo-motors and with the section of bar located in the space between these blades, the transverse cut is made; and then there is a slight lateral, back and forth movement of both blades, leaving the plug completely cut and with no burr.

7. "MACHINE FOR THE HOT DISPENSING OF BRASS OR ALUMINIUM PLUGS" according to the claim 6, **characterised in that** in the case of there being more than two blades, these will be radially distributed.

8. "MACHINE FOR THE HOT DISPENSING OF BRASS OR ALUMINIUM PLUGS" according to the claims 6 or 7, **characterised in that** this back and forth movement is performed preferably with respective auxiliary servo-motors, each one connected to one of the shears.

9. "MACHINE FOR THE HOT DISPENSING OF BRASS OR ALUMINIUM PLUGS" according to the claims 6 or 7, **characterised in that** there will be an automatic measuring element to determine the desired length of the bar to be cut.

10. "MACHINE FOR THE HOT DISPENSING OF BRASS OR ALUMINIUM PLUGS" according to the claim 9, **characterised in that** the automatic measuring element will be a sensing element arranged in the same direction as the bar but at a certain distance from its front, in a horizontal position, which is adapted to move forward driven preferably by a servo-motor and come to a stop against the front of the heated bar at the predetermined cutting length, and once the cut has been made the sensing element moves back again to allow the following cut of the same bar to be made and the cut section of bar to be released, so that the length parameter of the plug can be varied without having to interrupt the plug manufacturing process.

11. "MACHINE FOR THE HOT DISPENSING OF BRASS OR ALUMINIUM PLUGS" according to the claim 9, **characterised in that** on the side of the machine where the bar feeding means are located can be installed a bar loading element, adapted to store a large number of bars and gradually load them into the machine.
